# EUROPEAN PATENT APPLICATION

(11) **EP 2 706 479 A2**
(43) Date of publication of application: **12.03.2014**
(21) Application number: 12781942.3
(22) Date of filing: 04.05.2012
(51) Int. Cl.: G06F 21/24, G06F 15/16, G06Q 50/10

(54) **METHOD FOR CONTENT USE, DEVICE FOR CONTENT USE, MOBILE TERMINAL, AND RECORDING MEDIUM**

(30) Priority: 06.05.2011 KR 20110042967
(71) Applicant: Neowiz Internet Corporation, Gyeonggi-do 463-870 (KR)
(72) Inventor: CHA, Wonil, Seongnam-si Gyeonggi-do 461-809 (KR); JO, Sunghee, Seoul 139-766 (KR)
(74) Representative: Ahner, Philippe
(86) International application number: PCT/KR2012/003529
(87) International publication number: WO 2012/153949

(57) **Abstract**

The present invention relates to a content service technology, and more particularly to an apparatus and a method for content use, a device for content use, a mobile terminal and a recording medium capable of providing a streaming service while preventing the unauthorized use, illegal reproduction, and illegal falsification of content (figure 2).

## Description

### Technical Field

The present invention relates to a content service technology, and more particularly to an apparatus and a method for using contents, a mobile terminal and a recording medium, which can provide streaming service while preventing unauthorized use, illegal copying and illegal falsification of the contents.

### Pior Art

The conventional content providing sites have encrypted contents by using a Digital Right Management (DRM) technology and provided the encrypted contents to users, in order to prevent unauthorized use, illegal copying and illegal falsification of the contents. That is, the encryption of the contents to prevent the unauthorized use, the illegal copying and the falsification of the content has been achieved by a content provider.

As described above, since the conventional content providing site provides a user with contents stored and managed in an encrypted state, there is a problem in that the content providing site only provides a download service which allows a user to download the encrypted contents and does not provide a streaming service which allows a user to reproduce a music in real time without a download. That is, there has been a problem in that the content providing site could provide the contents only in a downloading manner, but not in a streaming manner.

If the conventional content providing site provides a streaming service of the contents without the encryption of the contents, the conventional content providing site is problematic in that it cannot prevent the unauthorized use, illegal copying and falsification of the contents.

### Disclosure of the Invention

The present invention has been made to solve the above-mentioned problems in the conventional art, and an aspect of the present invention is to provide a technology capable of providing a streaming service while preventing authorized use and illegal copying and falsification of the content.

In accordance to an aspect of the present invention, an apparatus for using contents is provided. The apparatus includes: a streaming unit for transmitting streaming request information for the contents to a content providing server, and for reproducing the contents in real time while receiving packet data for the contents; and an encrypted content creating and storing unit for encrypting all the packet data by using an encryption key created based on inherent information, so as to create and store the encrypted contents in a memory, when all the packet data for the contents are received.

In accordance with another aspect of the present invention, a method of using contents provided by a content using apparatus is provided. The method includes: transmitting streaming request information for the contents to a content providing server; reproducing the contents in real time while receiving packet data of the contents from the content providing server; encrypting all the packet data by using an encryption key created based on inherent information, so as to create the encrypted contents, when all the packet data of the contents are received after or before a completion of the real-time playback; and storing the encrypted contents in a memory.

In accordance with still another aspect of the present invention, a computer readable media for storing a program executing a content using method is provided. The storage media comprising: the program which implements a function of transmitting streaming request information for contents to a content providing server through a communication module of a mobile terminal, and reproducing the contents in real time by using packet data for the contents which are received through the communication module; a function of encrypting all the packet data by using an encryption key created based on inherent information, when all the packet data of the contents are received; and a function of storing the encrypted contents in a memory of the mobile terminal.

In accordance with still another aspect of the present invention, a mobile terminal for using contents is provided. The mobile terminal includes: a communication module for performing communication with a content providing server and an application store server; and a processor for executing an application downloaded through the application store server and installed in the mobile terminal, wherein the application transmits streaming request information for the contents to the content providing server through the communication module, reproduces contents by using packet data for received contents, encrypts all the packet data by using an encryption key created based on inherent information so as to create the encrypted contents when all the packet data for the contents are received, and stores the encrypted contents in a memory.

As described above, according to the present invention, it is possible to provide a content using device, a mobile terminal and an application which are capable of receiving contents from a content providing server while reproducing (streaming) the received content in real time, and then encrypting and storing the real-time reproduced contents automatically.

Accordingly, the content providing site can provide the streaming service while preventing unauthorized use and illegal copying and falsification of the contents.

According to the present invention, further, it is possible to provide the content using device, the mobile terminal and the application which are capable of reproducing the corresponding content offline, which is automatically encrypted and stored according to a real time reproduction, although a user does not access a network.

According to the present invention, furthermore, it is possible to provide the content using device, the mobile terminal and the application which are capable of providing the method of using various contents through the execution of a real time reproducing function, an automatic reproducing function, an offline reproducing function and a downloading function for the contents in association with right-to-use information.

According to the present invention, moreover, it is possible to provide the content using device, the mobile terminal and the application which are capable of preventing a user from arbitrarily and illegally extending a use term by changing system time information after the use term of the corresponding right-to-use is expired.

### Brief Description of Drawings

Fig. 1 is a block diagram illustrating a content service system according to an embodiment of the present invention.
Fig. 2 is a block diagram illustrating a content using device by which a user uses contents provided from a content providing server in the content service system according to the embodiment of the present invention.
Fig. 3 a block diagram conceptually illustrating a real time reproducing (streaming) function, an automatic storing function and an offline reproducing function for the contents which the content using device is capable of performing, according to the embodiment of the present invention.
Fig. 4 is a flowchart illustrating a method of using content according to the embodiment of the present invention.
Fig. 5 is a block diagram illustrating a content service system according to another embodiment of the present invention.
Fig. 6 is a block diagram illustrating a mobile terminal by which a user uses contents provided from a content providing server in the content service system according to another embodiment of the present invention.
Fig. 7 is a block diagram illustrating a method of using a sound source which is changeable according to whether a right-to-use is purchased and a type of the right-to-use.
Fig. 8 is a block diagram illustrating an example of the method of using the sound source through channel information and a playlist.
Figs. 9 to 12 are views illustrating a User Interface (UI) screen for an application which executes the method of using the sound source.

### Detailed description of the Invention

Hereinafter, the exemplary embodiments of the present invention will be described with reference to the accompanying drawings. With an addition of reference numerals to structural elements in the drawings, it is noted that an identical reference numeral possibly indicates an identical structural element although the structural element is shown in other drawings. Further, in the description of the present invention, when it is determined that a detailed description of related known functions or structures causes confusion in the subject matter of the present invention, the description will be omitted.

In the description of the structural elements of the present invention, terms "first", "second", "A", "B", "(a)", "(b)" and the like may be used. The terms are merely used to distinguish one structural element from another structural element, and do not limit a true nature, a sequence or an order of the corresponding structural element. In the case that it is described that a certain structural element "is connected to", "is coupled to", or "is in contact with" another structural element, it should be interpreted that another structural element may "be connected to", "be coupled to", or "be in contact with" the structural elements as well as that the certain structural element is directly connected to or is in direct contact with another structural element.

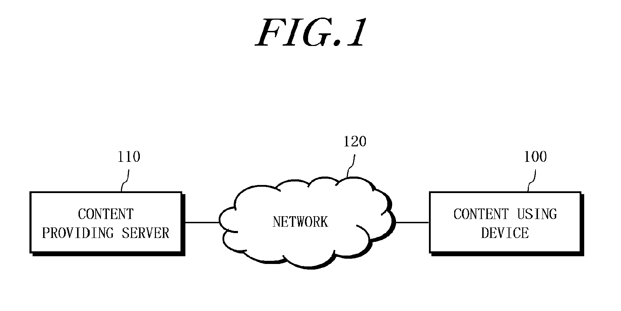

Fig. 1 is a block diagram illustrating a content service system according to an embodiment of the present invention.

Referring to Fig. 1, the content service system according to one embodiment of the present invention includes a content providing server 110 for storing contents and transmitting the stored contents, and a content using device 100 for receiving and using the contents from the content providing server 110 through a network 120.

In the description, the term "contents" may refer to multimedia data such as a sound source, a video, a photograph, and the like.

In the description, a phrase "using content" means all operations of the content using device 100 that receives and executes the contents, such as a real-time reproducing (streaming) of content, or a downloading of content.

The above-mentioned content providing server 110 may have an identical structure to that of a web server, a web application server, and the like in view of hardware. However, in view of software, the content providing server 110 may include a program module which is implemented by a programming language such as C, C++, Java, Visual Basic, Visual C and the like and performs various functions.

The above-mentioned content providing server 110 generally means a computer system and computer software (a server program) installed in the computer system, which are connected to a plurality of unspecified clients and/or other servers through an open-type computer network such as the Internet, accept a request of a client or another web server to perform an operation, and deduce and provide a result in response to the request. However, it should be understood in a wide concept that the content providing server 110 includes a series of application programs operating on the web server or the web application server and various databases constructed therein according to circumstance, as well as the above-mentioned server program.

Further, the above-mentioned content providing server 110 may be implemented by using various server programs provided to hardware for a general server according to an operating system such as DOS, Windows, Linux, UNIX, OS X, and the like. A representative server includes a Website and an Internet Information Server (IIS) used in the Windows environment, and CERN, NCSA, APACHE, and the like used in the UNIX environment.

Furthermore, the above-mentioned content providing server 110 classifies information on subscribers and lots of information or data related to the contents, and stores and manages the information and data in the database which is implemented in or outside of the server 110.

The content using device 100 may be a personal computer such as a desktop computer and a laptop computer, a mobile terminal such as a smart phone, a tablet PC, and a mobile communication terminal, a set-top box for IPTV, and the like. In addition, the content using device 100 may be any device which is connected to the network 120 so as to communicate with the content providing server 110 in a relation of a server-client.

The network 120 is a communication medium connecting the content providing server 110 to the content using device 100, and may be a mobile communication network or the Internet. The content using device 100 may access the network 120 through a communication module such as a wired or wireless LAN, or a mobile communication module.

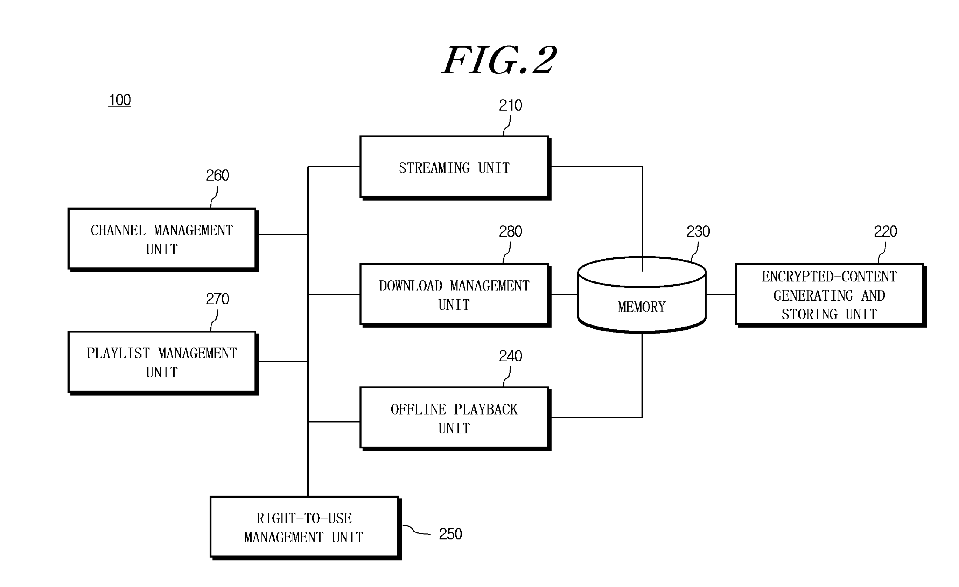

The above-mentioned content using device 100 will be described in detail with reference to Fig. 2.

Fig. 2 is a block diagram illustrating the content using device by which a user uses contents provided from the content providing server in the content service system according to one embodiment of the present invention.

The content using device 100 according to one embodiment of the present invention includes a streaming unit 210 for transmitting a request to perform a streaming of content to the content providing server 110 and reproducing the content in real time while receiving packet data for the corresponding content, an encrypted content creating and storing unit 220 for encrypting all packet data for the contents using an encryption key created based on inherent information and storing the encrypted contents in a memory 230, when all packet data of the contents are received before or after completing the real-time reproduction of the contents.

As described above, the content using device 100 according to one embodiment of the present invention can provide a function of automatically storing the received content for the real-time reproduction in the memory 230 during or after streaming in which the content is reproduced in real-time while being received.

As described above, further, the content using device 100 according to one embodiment of the present invention cannot store the received contents themselves but can encrypt and store the received contents when the received contents for the real-time reproduction are automatically stored in the memory 230, after or during the streaming.

The reason for encrypting and storing the contents as described above is to allow only a specific device (the content using device 100 capable of encrypting the contents), a specific user, or a specific application to reproduce the contents so as to prevent illegal copying and distribution of the contents.

The above-mentioned encrypted content creating and storing unit 220 creates an encryption key in which inherent information including at least one of log-on information, user identification information, device identification information and application identification information is expressed in a certain bit string, or receives an encryption key created in the content providing server 210, and stores the encryption key along with a decryption key corresponding to the encryption key in the memory 230.

The above-mentioned encrypted content creating and storing unit 220 may receive and store the decryption key from the content providing server 210, and may create and store the decryption key based on the encryption key.

Here, as an encryption system using the encryption key and the decryption key, a private key encryption system which performs encryption and decryption using an identical key (encryption key and decryption key) in a symmetric encryption manner, or a public key encryption system which carries out the encryption using a public key as the encryption key and the decryption using a secret key as the decryption key in an asymmetric encryption manner, may be used.

In addition, the content using device 100 according to one embodiment of the present invention further includes an offline playback unit 240 for reproducing the encrypted content stored in the memory 230 offline, as shown in Fig. 2.

The above-mentioned offline playback unit 240 has to decrypt the encrypted content stored in the memory 230 in order to reproduce the encrypted content stored in the memory 230 offline.

Accordingly, the offline playback unit 240 identifies whether the decryption key is stored in the memory 230, when a user makes a request to offline reproduce the encrypted content stored in the memory 230. Then, the offline playback unit 240 decrypts and reproduces the encrypted content by using the decryption key in only the case that the decryption key is stored. That is, the encrypted content stored in the memory 230 is content for which use by another user or another device is restricted due to the encryption thereof.

On the other hand, in order that the content using device 100 according to one embodiment of the present invention reproduces contents in real time through communication with the content providing server 110, encrypts and stores the contents, and reproduces the encrypted contents offline, a user may buy a corresponding right-to-use from a content providing service site (a service site launched on the content providing server 110).

Accordingly, the content using device 100 according to one embodiment of the present invention may further include a right-to-use managing unit 250 which stores and manages right-to-use information (information on a right-to-use for only a mobile terminal) on which use authority information including at least one of information on a kind of available services, information on the number of available contents, and information on terms of use is defined.

When a user inputs streaming request information on the contents, the above-mentioned streaming unit 210 determines whether a user has a streaming right to reproduce the contents in real time, based on the right-of-use information stored in the memory 230 through the function of the right-to-use management unit 250 for storing and managing the right-to-use information, and then it transmits input streaming request information to the content providing server 110.

For example, in the case that the user does not buy the exclusive right-to-use for a corresponding mobile device, since the content using device 100 has no the right-to-use information defining a use authority including at least one of the information one the kind of available services, the information on the number of available contents, and the information on the terms of use in the memory 230, the streaming unit 210 may indicate a notice that "there is no a right-to-use ticket for a playback of the corresponding content in real time" or that "a right-to-use not to perform a playback of the corresponding content in real time is used."

In the case that the user buys the exclusive right-to-use for the corresponding mobile device, alternatively, since the right-to-use information which defines the use authority including at least one of the information on the kind of the available services, the information on the number of the available contents, and the information on the terms of use is stored in the memory 230 of the content using device 100, the streaming unit 210 identifies the use authority information defined on the right-to-use stored in the memory 230 thereof when the user inputs information on a streaming request for contents, and transmits the information on the streaming request to the content providing server 110. At this time, the content providing server 110 identifies the use authority information defined on the stored right-to-use (identical to the right-to-use information stored in the memory 230 of the content using device 100) and transmits packet data of the corresponding contents, when it receives the streaming request information.

The above-mentioned offline playback unit 240 determines a presence or an absence of the right to reproduce offline the encrypted content stored in the memory 230, based on the use authority information defined on the right-to-use information, and then implements a function of reproducing the encrypted contents offline. That is, use of the encrypted content stored in the memory 230 may be restricted by the use authority information defined in the related right-to-use information. That is, the encrypted content stored in the memory 230 may be different from general contents stored in a general PC and the like and used without a limitation of terms.

Particularly, the above-mentioned offline playback unit 240 compares reference time information with expiration time information, which is identified through the information on the terms of use included in the use authority information defined in the right-to-use information. As a result of comparison, if the expiration time is later than the reference time, it is determined that it is possible to reproduce the encrypted contents stored in the memory 230. To the contrary, if the expiration time is earlier than the reference time, it is determined that it is impossible to reproduce the encrypted contents stored in the memory 230.

With relation to the above-mentioned reference time information, the offline playback unit 240 automatically logs in to the content providing server 510 if a communication function of the content using device 100 is enabled, and obtains a later time of a most recent access time of the content using device 100 which is received from the content providing server 110 and a time on a system of the content using device 100, as the reference time.

Accordingly, a certain user who has an expired right-to-use can be prevented from illegally extending the terms of use by changing information on a system time of the content using device 100.

When the content using device 100 according to one embodiment of the present invention carries out the content using function such as the real-time playback function (streaming function) through the streaming unit 210, the automatic storing function through the encrypted content creating and storing unit 220, the offline playback function through the offline playback unit 240, and the downloading function (content storing function without the real-time playback function), it selects basic information on specific content among plural pieces of basic information on the contents which are classified to correspond to each of plural pieces of channel information and executes a function of using the content corresponding to the selected basic information.

As shown in Fig. 1, therefore, the content using device 100 according to one embodiment of the present invention further includes a channel management unit 260 for classifying and displaying lots of the basic information on the contents which are received from the content providing server 110 and previously stored in the memory 230, to correspond to each of the plural pieces of the channel information.

Accordingly, the streaming unit 210 transmits streaming request information to the content providing server 110 when the user inputs "playback requesting information" on the content which corresponds to the basic information on the specific content classified to correspond to the specific channel information selected from lots of channel information.

Here, the specific content basic information includes basic information on the specific content except for data for the playback of the specific content. For example, in the case that the specific content is a sound source, specific content basic information includes a title of a musical composition, an artist, an album, an image of the sound source, and the like. In the case that the specific content is a video, basic information on the specific content includes a title of the video, actors/actresses, an image of a poster, and the like.

Further, lots of the basic content information which the above-mentioned channel management unit 260 receives from the content providing server 510 and previously stores in the memory 630 of the mobile terminal 500 are classified and displayed according to each of many pieces of channel information. Then, when "information on a request for putting-in contents" corresponding to basic information on certain content which is classified as certain channel information selected from lots of channel information is input, the playlist management unit 270 shown in FIG. 1 registers and manages the basic information on the certain content in a playlist selected from a newly created playlist or the previously created playlist.

Therefore, the streaming unit 210 transmits "streaming request information (identical to the streaming request information)" on the content to the content providing server 110 when "playback request information (identical to streaming request information)" on the content corresponding to the basic information on the certain content registered to the playlist is input.

As shown in FIG. 1, the content using device 100 according to one embodiment of the present invention further includes a download management unit 280 which transmits "download request information" on the certain content to the content providing server 110 when "information on a request for creating an offline playlist (identical to the download request information)" is input for the certain content corresponding to the basic information on the certain content registered to the playlist by the playlist management unit 270, encrypts all packet data for the certain content using an encryption key so as to create encrypted content when all data for the specific contents is received, registers the encrypted content to "the offline playlist", and stores the encrypted content in the memory 230.

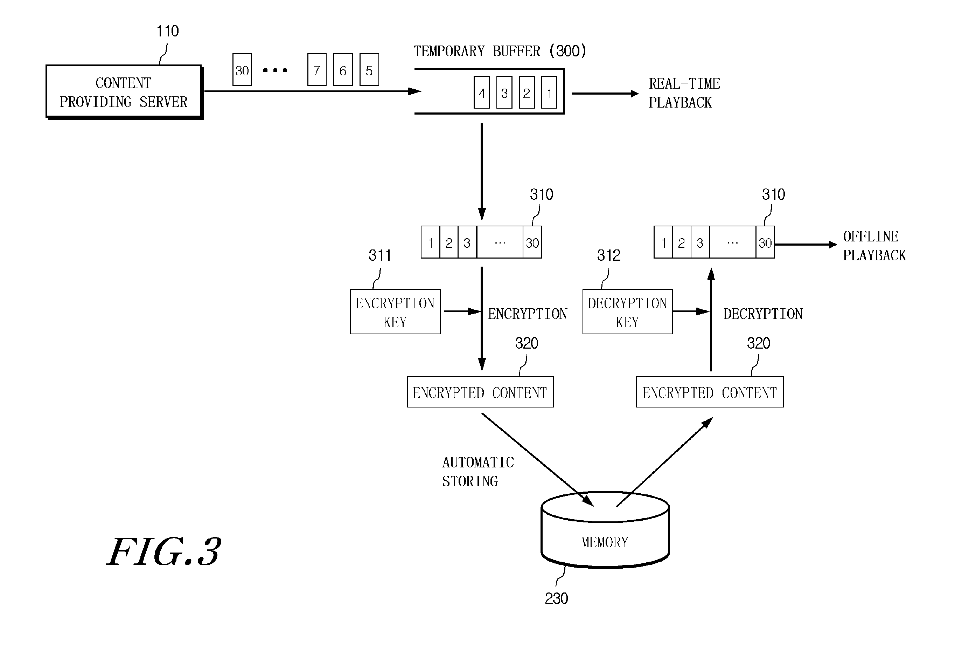

The above-mentioned real-time playback (streaming) function, automatic storing function, offline playback function and the like will be described in detail with reference to Fig. 3.

Fig. 3 a block diagram conceptually illustrating a real time reproducing (streaming) function, an automatic storing function and an offline reproducing function for the contents which the content using device is capable of performing, according to one embodiment of the present invention.

Referring to Fig. 3, the above-mentioned streaming unit 210 reads packet data 1, 2, 3, 4, ..., 30 stored from the temporary buffer 300 and reproduces corresponding contents in real time when the packet data 1, 2, 3, 4, ..., 30 for the contents received from the content providing server 110 is stored in the temporary buffer 300 allocated to specific address space of the memory 230.

Referring to Fig. 3, the above-mentioned encrypted content creating and storing unit 220 encrypts all packet data 310 using the encryption key 311 so as to create encrypted contents 320, and stores the created and encrypted contents 320 in the memory 230 when all packet data 310 for the contents are stored in the temporary buffer 300. Here, all packet data 310 are a combination of packet data 1, 2, 3, ..., 30 divided as a unit of transmission and transmitted through the network 120, and are equal to contents before they are divided into the packet data.

The encrypted content creating and storing unit 220 stores the encrypted content 320 in the memory 230, and then deletes all packet data 310 stored in the temporary buffer 300 when the streaming is completed.

When a user inputs offline playback request information for the encrypted contents 320 stored in the memory 230, the offline playback unit 240 decrypts the corresponding encrypted contents 320 by using the decryption key 312 and reproduces offline the contents 310 before the encryption.

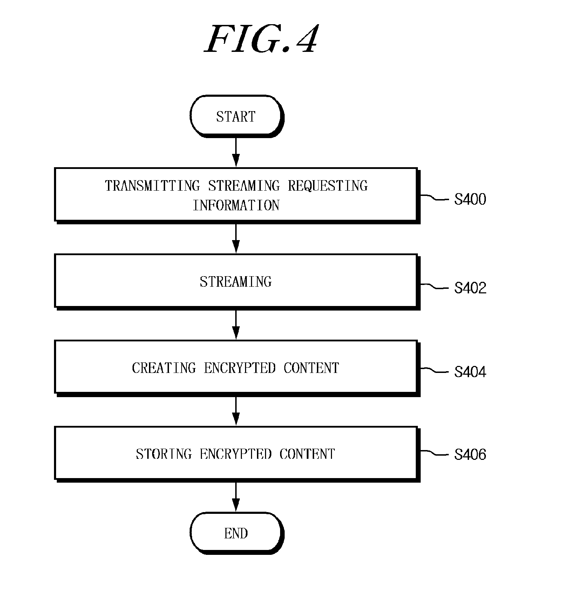

Fig. 4 is a flowchart briefly illustrating the above-mentioned method of using the contents provided by the content using device 100 according to one embodiment of the present invention.

Referring to Fig. 4, the method of using the content provided by the content using device 100 according to one embodiment of the present invention includes transmitting streaming request information for the contents to the content providing server 110 (step S400), reproducing the contents in real-time while receiving the packet data for the contents from the content providing server 110 (step S402), encrypting all packet data for the contents by using an encryption key created based on inherent information so as to create the encrypted contents when all packet data are received before or after completion of the real-time playback (step S404), and storing the created and encrypted contents in the memory 230 (step S406).

The above-mentioned method of using the contents according to one embodiment of the present invention includes the contents using method of using the real-time playback function, the automatic storing function, the offline playback function, the downloading function (storing function without the real-time playback), and the like which the content using device 100 executes.

Hereinafter, a case that the content using device 100 is a mobile terminal and an application installed in the mobile terminal executes the content using method through the real-time playback function, the automatic storing function, the offline playback function and the downloading function (storing function without the real-time playback function) which the content using device 100 performs will be described as another example of the present invention.

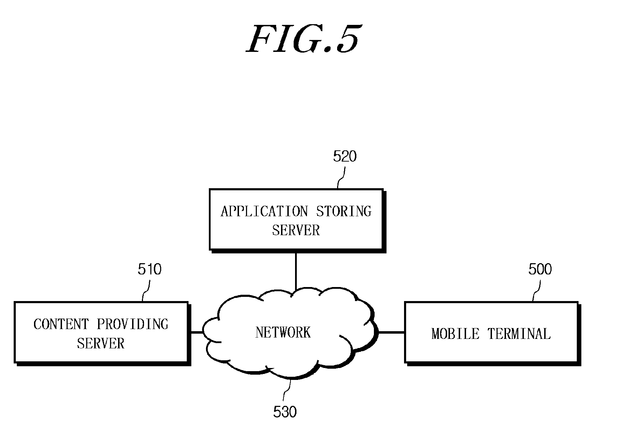

Fig. 5 is a block diagram illustrating a content service system according to another embodiment of the present invention.

Referring to Fig. 5, the content service system according to another embodiment of the present invention includes a content providing server 510 for storing contents and providing the contents in response to a request, an application store server 520 for distributing applications through an application store (referred to as "App store"), and a mobile terminal 500 for installing an application executing a function related to use of the contents (playback, download and the like of the contents) via the application store server 520 and for allowing a user to receive and use the contents from the content providing server 510 by using the installed application. That is, a main body which stores and provides the contents is the content providing server 110, and a main body which uses the contents is the mobile terminal 500. Further, a main body which executes a function of using the content is the application installed in the mobile terminal 500.

The above-mentioned content providing server 510 and the application store server 520 may have an identical structure to that of a web server, a web application server, or the like in view of hardware. However, in view of software, the content providing server 110 may include a program module which is implemented by a programming language such as C, C++, Java, Visual Basic, Visual C and the like, and carries out various functions.

The above-mentioned content providing server 510 and the application store server 520 generally mean a computer system and computer software (a server program) installed in the computer system, which are connected to a plurality of unspecified clients and/or other servers through an open-type computer network such as the Internet, accept a request of a client or another web server to perform an operation, and deduce and provide a result in response to the request. However, it should be understood in a wide concept that the content providing server 110 and the application store server 520 include a series of application programs operating on the web server or the web application server, as well as the above-mentioned server program, and various databases constructed therein according to circumstance.

The above-mentioned content providing server 510 and the application store server 520 may be implemented by using general hardware for a server and various server programs provided according to an operating system such as DOS, Windows, Linux, UNIX, OS X and the like.

Furthermore, the above-mentioned content providing server 510 and the application store server 520 classifies information on subscribers, and lots of information or data related to the contents, and stores and manages the information and data in the database which is implemented in or outside of the server 110.

The above-mentioned network 530 is a communication media which connects the content providing server 510, the application store server 520, and the mobile terminal 500 with one another, and may include a mobile network, the internet or the like.

The above-mentioned mobile terminal 500 can access the network 530 through a communication module, a mobile communication module, or the like such as a wired or wireless LAN, and may be a smart phone, a tablet PC, a Personal Digital Assistant (PDA), a mobile communication terminal, and the like as an example.

Further, the above-mentioned mobile terminal 500 may have an operating system only for a mobile terminal, such as Android of Google, iOS of Apple, and Windows Mobile of Microsoft, mounted thereon, and the above-mentioned content providing server 510 and the application store server 520 may be compatible with the operating system only for the mobile terminal in order to communicate with the mobile terminal 500 on which the operating system only for the mobile terminal is mounted as described above.

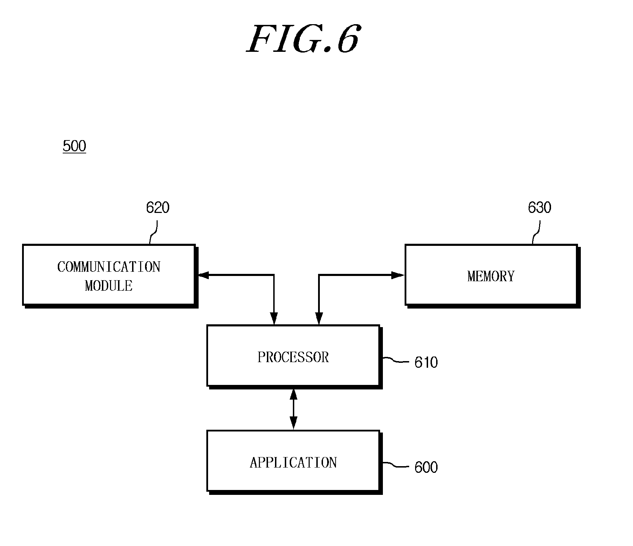

Hereinafter, the above-mentioned mobile terminal will be described in detail with reference to Fig. 6.

Fig. 6 is a block diagram illustrating the content using device by which a user uses contents provided from the content providing server in the content service system according to another embodiment of the present invention.

Referring to Fig. 6, in the content service system according to another embodiment of the present invention, the mobile terminal 500 which uses the contents provided from the content providing server 510 includes a communication module 620 for performing communication with the content providing server 510 and the application store server 520, a processor 610 for executing the application 600 which is downloaded through the application store server 520, and installed in the mobile terminal 500, which is a main controller of the mobile terminal 500, and a memory 630 in which various kinds of information and data are stored.

The above-mentioned application 600 carries out a "streaming function" of reproducing the content in real-time by using the packet data for the contents which are received through the communication module 620 of the mobile terminal 500 in response to a request for streaming the content which is input by a user and is transmitted to the content providing server 510 through the communication module 620 of the mobile terminal 500, and an automatic storing function of encrypting all packet data for the contents by using an encryption key created based on inherent information so as to create the encrypted contents, when all packet data for the contents are received before or after a completion of the real-time playback, and storing the encrypted contents in the memory 630 of the mobile terminal.

The application 600 is a program implementing the content using method according to another embodiment of the present invention, and may be recorded in a computer readable medium.

The application 600 which is the program implementing the content using method according to another embodiment of the present invention can store the packet data for the content received from the content providing server 510 in a temporary buffer allocated to the memory 630 of the mobile terminal 500, and can implement the function of encrypting all packet data stored in the temporary buffer by using the encryption key which is created and previously set by the application 600 or received from the content providing server 510, so as to create the encrypted contents.

Further, the application 600 implementing the content using method according to another embodiment of the present invention carries out a function of creating or receiving the encryption key, in which the inherent information including at least one of logging-on information, user identification information, mobile terminal identification information and application identification information is expressed in a certain bit string, from the content providing server 510, and a function of storing and managing the encryption key and a decryption key corresponding to the encryption key in the memory 630.

The above-mentioned application 600 may receive and store the decryption key from the content providing server 510, and create and store the decryption key based on the encryption key.

Furthermore, the application 600 which is the program implementing the content using method according to another embodiment of the present invention can implement a function of registering the created and encrypted contents to the offline playlist while storing the contents in the memory 630 of the mobile terminal 500, and a function of identifying whether the decryption key is stored in the memory 630 of the mobile terminal 500 when a user inputs information on a request for an offline playback of the encrypted contents registered to the offline playlist, and decrypting the encrypted contents by using the decryption key only in the case that the decryption key is stored therein, so as to reproduce the contents. According to the above description, the encrypted contents stored in the memory 630 are the contents of which use by another device, user or application is restricted due to the encryption thereof.

On the other hand, in order for a user to reproduce the contents in real time through communication with the content providing server 510, encrypt and store the contents, and reproduce the encrypted contents offline by using the application 600 which is the program implementing the content using method according to another embodiment of the present invention, the user may buy a right-to-use in order to reproduce the corresponding contents at a content providing service site (a service site launched on the content providing server 510).

Accordingly, the application 600 which is the program implementing the content using method according to another embodiment of the present invention may implement a function of storing and managing information on the right-to-use information (right-to-use information only for the mobile terminal) in which use authority information including at least one of information on an available service type, information on the number of available contents, and information on the terms of use is defined, in the memory 630 of the mobile terminal 500.

The application 600 which is the program implementing the content using method according to another embodiment of the present invention can implement a function of determining whether a user has a streaming right to reproduce the contents in real time, based on the use authority information defined in the right-to-use stored in the memory 630 through the function of storing and managing the above-mentioned use ticket when a user inputs streaming request information for the contents, and then transmitting input streaming request information to the content providing server 510.

For example, in the case that the user does not buy the right-to-use only for the mobile terminal, since the right-to-use information defining the use authority information including at least one of the information on the available service type, the information on the number of available contents, and the information on the terms of use is not stored in the memory 630 of the mobile terminal 500, the application 600 which is the program implementing the content using method according to another embodiment of the present invention may indicate a notice that "there is no right-to-use for a playback of the corresponding content in real time" or that "a right-to-use not to perform a playback of the corresponding content in real time is used" when the user inputs the streaming request information for the contents.

In the case that the user buys the exclusive right-to-use for the corresponding mobile device, alternatively, since the right-to-use information which defines the use authority information including at least one of the information on the available service type, the information on the number of the available contents, and the information on the terms of use, is stored in the memory 630 of the mobile terminal, the application which is the program implementing the content using method according to another embodiment of the present invention identifies the use authority information defined on the right-to-use information stored in the memory 630 when the user inputs streaming request information for contents, and transmits the streaming request information to the content providing server 510. At this time, the content providing server 510 identifies the use authority information defined on the stored right-to-use information (identical to the right-to-use information stored in the memory 630 of the content using device 500) and transmits packet data of the corresponding contents, when it receives the streaming request information.

The application 600 which is the program implementing the content using method according to another embodiment of the present invention can implement a function of determining whether a content playback device has an authority to reproduce offline the encrypted contents stored in the memory 630, based on the use authority defined on the right-to-use information, and reproducing the encrypted contents. That is, use of the encrypted content stored in the memory 630 may be restricted by the use authority information defined on the related right-to-use information. In other words, the encrypted content stored in the memory 630 may be different from general contents stored in a general PC and the like and used without a limitation of terms.

Particularly, the application 600 which is the program implementing the content using method according to another embodiment of the present invention compares reference time information with expiration time information which is identified using the information on the terms of use which is included in the use authority information defined on the right-to-use information. As a result of a comparison, if the expiration time is later than the reference time, it is determined that it is possible to reproduce the encrypted contents stored in the memory 630. To the contrary, if the expiration time is earlier than the reference time, it is determined that it is impossible to reproduce the encrypted contents stored in the memory 630.

With the above-mentioned reference time information, the application 600 which is the program implementing the content using method according to another embodiment of the present invention automatically accesses (logs in to) the content providing server 510 when a communication function of the mobile terminal 500 is enabled, so as to carry out a function of obtaining a time which is later between most recent server accessing time of the mobile terminal 500 received from the content providing server 510, and a system time of the mobile terminal 500, as the reference time information.

Accordingly, a certain user who has the right-to-use of which the term of use has expired can be prevented from extending the terms of use by changing information on the system time of the mobile terminal 500 without permission.

The application 600 which is the program implementing the content using method according to another embodiment of the present invention can carry out the content using method by using the real-time playback function (streaming function), the automatic storing function, the downloading function (content storing function without a real-time playback) and the offline playback function, in which at least one kind of basic information on the specific contents is selected from lots of basic information on the contents which are classified according to each of lots of channel information, and the method (the real-time reproducing method, the automatic storing method while the real-time reproduction, the offline playback method, the downloading method) of using the contents corresponding to the selected basic information on the specific contents can be carried out.

With relation to the implementation of the content using method, the application 600 which is the program implementing the content using method according to another embodiment of the present invention classifies and displays the basic information on the contents, which are received from the content providing server 510 and previously stored in the memory 630 of the mobile terminal 500, according to each of plural channels, and transmits streaming request information through the communication module 620 of the mobile terminal 500 to the content providing server 510 when the user inputs "playback request information" for the contents corresponding to the basic information on the specific contents which is classified as specific channel information.

Here, the basic information on the specific contents includes basic information on the specific contents except for data for the playback of the specific content. For example, in the case that the specific content is a sound source, the basic information on the specific content includes a title of a musical composition, an artist, an album, an image of the sound source, and the like. In the case that the specific content is a video, the basic information on the specific content includes a title of the video, actors/actresses, an image of a poster, and the like.

Further, the application 600 which is the program implementing the content using method according to another embodiment of the present invention can implement a function of classifying and displaying the basic information on the contents which is received from the content providing server 510 and previously stored in the memory 630 of the mobile terminal 500, according to each of lots of channel information, and registering and managing the basic information on the specific contents to a playlist selected from a newly created playlist and the previously created playlists when "putting-in contents request information", which corresponds to the basic information on the specific contents classified as the specific channel information, is input, and a function of transmitting "streaming request information" for the contents to the content providing server 510 through the communication module 620 of the mobile terminal 500 when "playback request information (identical to streaming request information)" for the contents corresponding to the basic information on the specific contents which is registered to the playlist is input.

Further, the application 600 which is the program implementing the content using method according to another embodiment of the present invention can implement a function of classifying and displaying the basic information on the contents which is received from the content providing server 510 and previously stored in the memory 630 of the mobile terminal 500, according to each of lots of channel information, and registering and managing the basic information on the specific contents to a playlist selected from a newly created playlist and the previously created playlists when "information on a request for putting-in the specific contents" which corresponds to the basic information on the specific contents classified as the specific channel information is input, and a function of transmitting "downloading request information" for the specific contents to the content providing server 510 through the communication module 620 of the mobile terminal 500 when "offline playlist creating request information (identical to the downloading request information)" for the specific contents corresponding to the basic information on the specific contents which is registered to the playlist is input, encrypting all packet data of the specific contents by using the encryption key so as to create the encrypted contents when all data of the specific contents are received, registering the encrypted contents to the "offline playlist", and storing the encrypted contents in the memory 630 of the mobile terminal 500.

The application 600 which is the program implementing the content using method according to another embodiment of the present invention can carry out the above-mentioned functions by storing it in a computer readable recording medium, and executing it by means of a computer.

As described above, in order for the computer to read the program recorded in the recording medium and to execute the functions implemented in the form of the program, the above-mentioned program may include codes encoded in a computer language such as C, C++, Java, machine language, and the like, which a processor of the computer can read through an interface of the computer.

The codes may include functional codes related to a function defining the above-mentioned functions, and a control code related to an execution procedure necessary for the execution of the above-mentioned functions by means of the processor of the computer according to a desired procedure.

Further, such codes may further include a code related to a memory reference with respect to a location (an address) of an internal memory or an external memory of the computer to which the processor of the computer is referred for additional information or media in order to carry out the above-mentioned functions.

Furthermore, in the case that the processor of the computer needs to communicate with another computer or the content providing server which is located at a remote place, in order to perform the above-mentioned functions, the code may further include a code related to communication with respect to how the processor of the computer communicates with another computer or the content providing server which is located at a remote place, by using the communication module of the computer, and which information or media the computer transmits and receives during communication.

As described above, the computer readable medium in which the application 600 is recorded as the program implementing the content using method according to another embodiment of the present invention may include a ROM, a RAM, a CD-ROM, a magnetic tape, a floppy disc, an optical media storage unit and the like as an example, and may be implemented in the form of a carrier wave, i.e. a transmission via the Internet.

Particularly, the computer readable medium in which the application 600 is stored as the program implementing the content using method according to another embodiment of the present invention may be a storage unit, i.e. a hard disc, included in the application store server 520, or the application store server 530 itself.

The computer readable recording media may be dispersed to computer systems connected to one another through a network, and store and execute a computer readable code in a dispersion manner. In this case, one or more computers of the plural dispersed computers carry out some functions described above, and transmit the results to one or more other dispersed computers. The computers which receive the results also may carry out some functions described above, and provide the results to the other dispersed computers.

The functional program, the related code and code segments which implement the present invention may be easily deduced or modified by programmers skilled in the art to which the present invention belongs, considering system environment of the computer which reads the recording media and executes the program.

The computer which can read the recording media on which the application 600 is recorded as the program implementing the content using method according to another embodiment of the present invention may include a mobile terminal 500 such as a smart phone, a tablet PC, a PDA, and a mobile communication terminal, as well as a general PC such as a desktop PC and a laptop computer. Furthermore, it should be interpreted that the computer might include all devices capable of computing.

In the case that the computer capable of reading the recording media on which the application 600 is recorded as the program implementing the content using method according to another embodiment of the present invention is a general PC, the general PC may download the application 600 from the application store server 520 and install the application 600 to the mobile terminal 500 through a synchronization program.

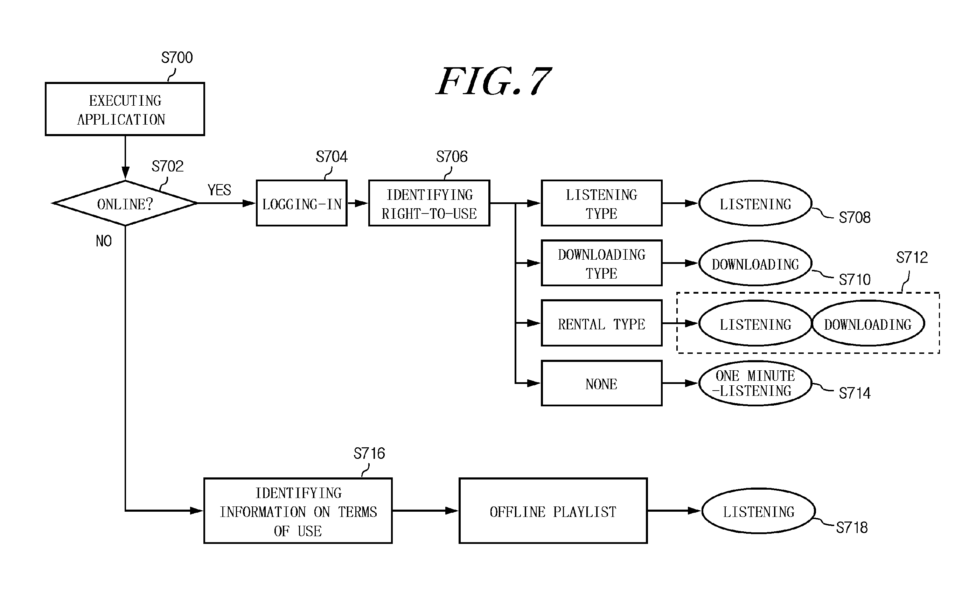

Hereinafter, the above-mentioned content using method according to another embodiment of the present invention will be described with reference to Figs. 7 to 12. On the assumption that the contents are sound sources, a sound source using method including a method of reproducing the sound sources in real-time, a method of automatically storing the sound sources during the real-time playback of the sound sources, a method of reproducing the sound sources offline, and a method of downloading the sound sources will be described.

Fig. 7 is a block diagram illustrating a method of using a sound source which is changeable according to whether the right-to-use is purchased and a type of the right-to-use.

Referring to Fig. 7, when the application 600 installed to the mobile terminal 500 is executed in step S700, the application 600 identifies that a communication module 620, such as a WiFi module or a mobile communication module, of the mobile terminal 500 is enabled and controls the mobile terminal 500 to access the content providing server 510. Then, the application 600 determines whether the mobile terminal 500 stays in an online state of accessing the content providing server 510, in step S702.

As a result of a determination, when it is determined that the mobile terminal 500 stays in the online state, the application 600 automatically logs on to the content providing server 500 in step S704.

Then, the application 600 identifies a right-to-use information through communication with the content providing server 510 (question and answer for the right-to-use information) or through a search for information stored in the memory 630, and determines whether a user buys the right-to-use, and if so, which type of right-to-use the user buys, in step S706.

As a result of identifying of the right-to-use, if right-to-use information on a listening type right-to-use is stored in the content providing server 510 and/or the memory 630, the application 600 can perform a function of listening (real time reproducing) to music which is selected by a user.

As a result of identifying of the right-to-use, if right-to-use information on a listening type right-to-use is stored in the content providing server 510 and/or the memory 630, the application 600 can perform a function of listening (real time reproducing) to music which is selected by the user in step S708. At this time, when the listening function is performed, a function of automatically storing a sound source of the selected music is not performed.

As a result of identifying the right-to-use, if right-to-use information on a downloading type right-to-use is stored in the content providing server 510 and/or the memory 630, the application 600 can perform a function of downloading (storing) a sound source of a music which is selected by the user in step S710.

As the result of identifying the right-to-use, if right-to-use information on a rental type right-to-use is stored in the content providing server 510 and/or the memory 630, the application 600 can perform a function of listening to (real time reproducing) and downloading a sound source of music which is selected by the user in step S712. At this time, the downloading function may be the automatic storing function according to the real-time playback.

As the result of identifying the right-to-use, if no right-to-use information on any right-to-use is identified through the content providing server 510 and the memory 630, the application 600 does not perform the functions of listening to the entire music and downloading the sound source of the music which is selected by the user, but perform only a function of listening to the music for one minute, in step S714.

It is determined whether the mobile terminal 500 stays in the online state of accessing the content providing server 510, in step S702. As a result of a determination, if it is determined that the mobile terminal does not stay in the online state, the application 600 identifies the use authority information on the previously bought right-to-use in the memory 630, and the information on the terms of use included in the use authority information defined on the identified right-to-use information in step S716. As the result of identifying the information on the terms of use, if it is within a valid term, the application reproduces the sound source (encrypted sound source) registered in the offline playlist and stored in the memory 630 so as to perform the listening function in step S718.

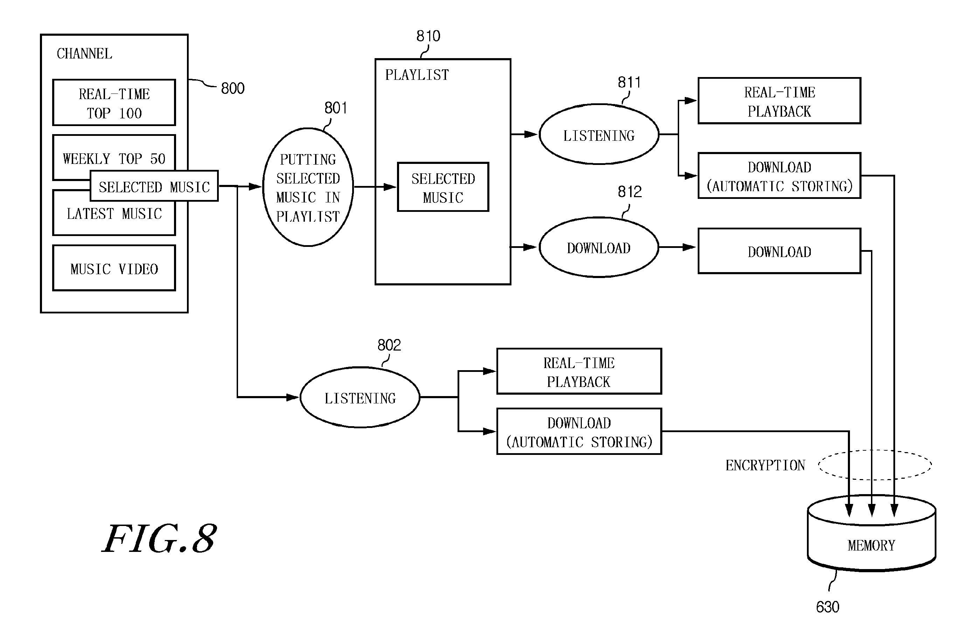

Fig. 8 is a block diagram illustrating an example of the method of using the sound source through channel information and a playlist.

Referring to Fig. 8, the application 600 classifies and manages the basic information on the contents, which are received from the content providing server 510 and previously stored in the memory 630 of the mobile terminal 500, according to each of lots of channel information, i.e. real-time TOP 100, weekly TOP 100, latest music, music videos and the like, and displays a screen 810 related to the lots of channel information which are managed as described above.

Referring to Fig. 8, when a user selects certain channel information while watching the channel information screen 810, selects at least one piece among various pieces of basic information (title of music) on music which are displayed in association with specific channel information, and selects "putting-in content button 801", the basic information on the selected music is registered in the playlist.

Referring to Fig. 8, when the user selects a playlist watching button, the application 600 displays a playlist screen 810 on which the basic information on the music registered to the playlist is displayed.

Referring to Fig. 8, when the user selects the basic information on the specific music through the playlist screen 810 on which the basic information on the music registered playlist is displayed, and selects a "listening button 811" so that listening request information on the music corresponding to the basic information on the specific music is input, the application 600 receives the corresponding sound source (music file) while performing a function (streaming function) of reproducing the corresponding music in real time, and a function of encrypting the received sound source (music file) by using an encryption key previously stored in the memory 630 or an encryption key received from the content providing server 510 and automatically storing the encrypted sound source in the memory during the real-time playback of the corresponding music.

Referring to Fig. 8, when the user selects at least one piece of the basic information on the specific music through the playlist screen 810 on which the basic information on the music registered to the playlist is displayed, and selects a "download button 812" so that the download request information on the sound source corresponding to at least one selected piece of basic information on the specific music is input, the application 600 receives the corresponding sound source from the content providing server 510, encrypts the received sound source by using an encryption key previously stored in the memory 630 or an encryption key received from the content providing server 510, and stores (downloads) the encrypted sound source in the memory 630.

Referring to Fig. 8, when the user selects specific channel information while viewing a channel information screen 800, selects basic information (title of music) on a specific music among pieces of basic information on the music which are displayed in association with the specific channel information, and selects a "listening button 802", the application 600 performs a function of receiving the corresponding sound source from the content providing server 510 while reproducing the sound source in real time, encrypting the received sound source by using an encryption key previously stored in the memory 630, or an encryption key received from the content providing server 510, and automatically storing the encrypted sound source 630 during the real-time playback of the sound source.

The real-time playback function, the automatic storing function and the downloading function during the real-time playback, which are performed by a scenario selected by the user as shown in Fig. 8, can be carried out only in the case that the application 600 identifies the right-to-use information and determines that the listening, the downloading and the like of the corresponding sound source can be performed based on the use authority information defined on the corresponding right-to-use information, as shown in Fig. 7.

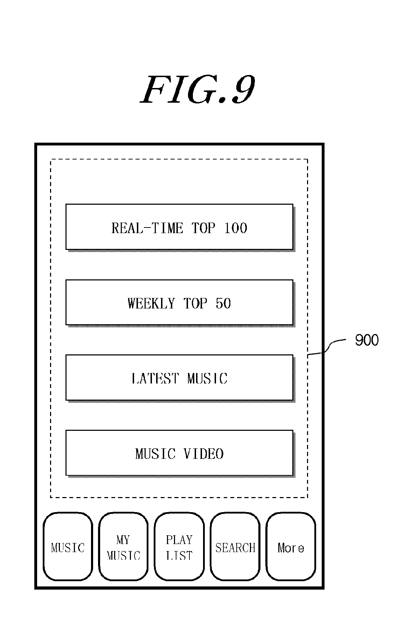

Figs. 9 to 11 are views illustrating a User Interface (UI) screen for an application which executes the method of using the sound source as described above with reference to Fig. 8.

Referring to Fig. 9, the application 600 classifies and manages the basic information on the music files, which are received from the content providing server 510 and previously stored in the memory 630 of the mobile terminal 500, according to each of lots of channel information, i.e. real-time TOP 100, weekly TOP 100, latest music, music videos and the like, and displays a screen 900 related to lots of channel information which are managed as described above.

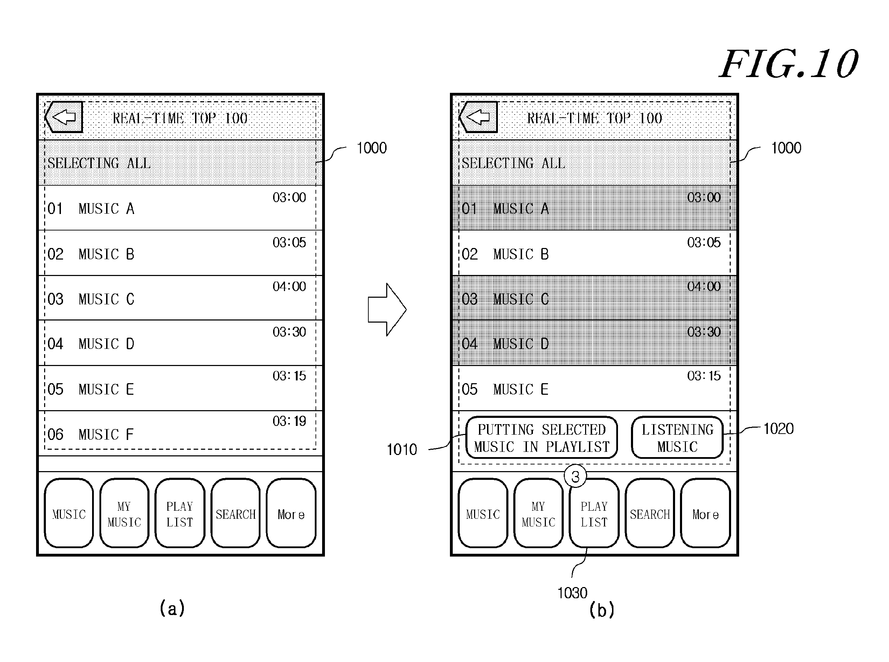

When the user selects channel information such as "real-time TOP 100" while viewing the channel information screen 900, the channel screen 1000 corresponding to selected channel information is displayed as shown in Fig. 10(a). The basic information (title and playback time of music) on the music which is classified in the selected channel information is displayed on the channel screen 1000.

Referring to Fig. 10(b), when the user selects three music files including "music A", "music B", and "music C" while viewing the channel screen 1000, a putting-in content button 1010" and a listening button 1020 are displayed on the channel screen.

Referring to Fig. 10(b), when the user selects the listening button 1020, the application 600 performs functions of reproducing the selected three music files in real time, and automatically storing the three music files. That is, when the sound sources (music files) of the three music files are received from the content providing server 510, the music files are reproduced in real time, encrypted and stored in the memory 630, simultaneously. When the function of the real-time playback is performed, the selected three music files are also registered in the playlist.

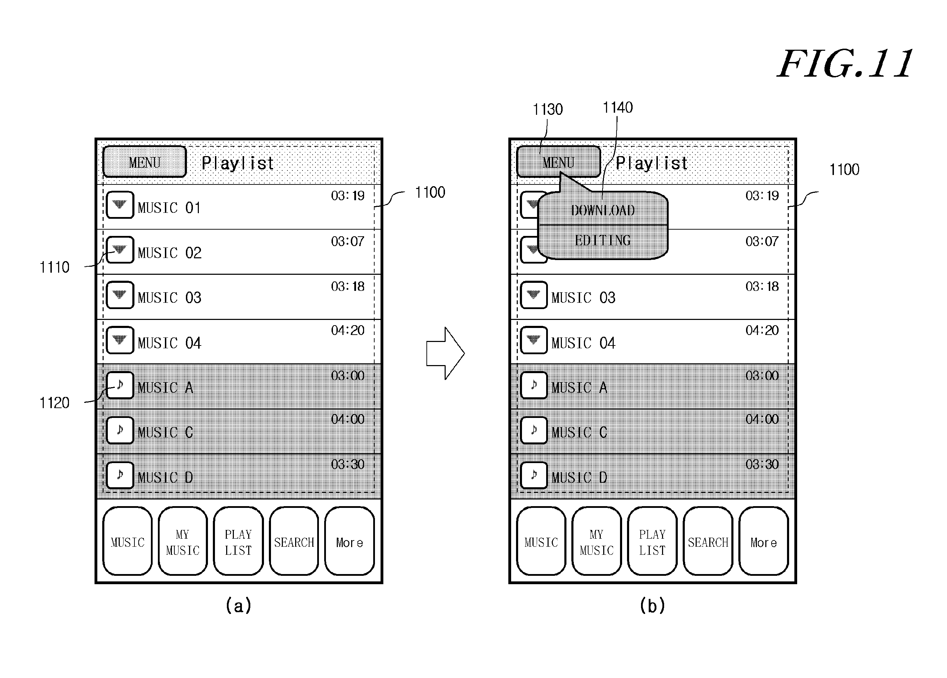

Referring to Fig. 10(b), when the user selects the putting-in content button 1010, the application 600 registers the selected three music files (basic information on the music) in the playlist, and displays the number of the files registered in the playlist. When the user selects the playlist button 1030, the screen is converted to the playlist screen 1100 as shown in Fig. 11(a).

Referring to Fig. 11(a), it can be found that the selected three music files, i.e. the music A, the music C, and the music D, are displayed on the playlist screen 1100.

Since the sound sources of the music files registered in the playlist through the putting-in content function are not downloaded yet, the application 600 displays different icons 1110 and 1120 in order to distinguish downloaded file(s) from the file(s) not yet downloaded.

Referring to Fig. 11(a), the user can select and reproduce a music file to be listened to while viewing the playlist screen 1100. At this time, the application 600 performs a function of reproducing the selected music file in real time, and a function of automatically storing the music file, simultaneously. That is, when the sound sources (music files) of the selected three music files are received from the content providing server 510, the music files are reproduced in real time, encrypted and stored in the memory 630, simultaneously. At this time, the encrypted sound sources stored in the memory 630 are registered in the offline playlist.

Referring to Fig. 11(b), when the user selects a menu button 1130 displayed on the playlist screen 1100, the application 600 displays a window 1140 for a selection of a download and an edition. When the user selects the three music files, i.e. the music A, the music C and the music D, selects the menu button 1130 and selects the download item, the application 600 performs a download function. That is, the application 600 transmits the downloading request information to the content providing server 510, receives the corresponding sound sources, encrypts the received sound sources to create the encrypted sound sources, and stores the encrypted sound sources in the memory 630. At this time, the encrypted sound sources stored in the memory 630 are registered in the offline playlist.

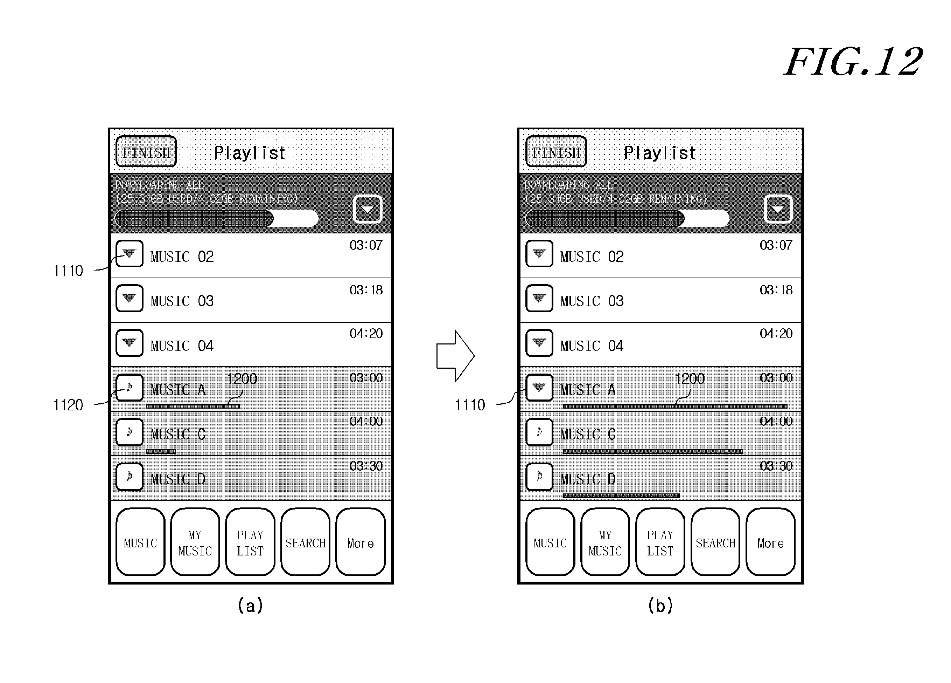

As shown in Figs. 12(a) and 12(b), the application 600 may display a state of receiving the corresponding sound sources from the content providing server 510 in the form of a progress bar 1200.

Referring to Fig. 12(b), the application 600 receives all sound sources (music file) of the music A, encrypts the received sound sources to create the encrypted sound sources, stores the encrypted sound sources in the memory 630, and changes the icon 1120 indicating the sound sources which are not downloaded yet into the icon 1110 indicating the sound sources which are downloaded, so as to display the completion of the downloading the sound sources.

As described above, according to the present invention, it is possible to provide a content using device, a mobile terminal and an application which are capable of receiving contents from a content providing server while reproducing the received content in real time, and then encrypting and storing the real-time reproduced contents automatically.

Accordingly, the content providing site can provide a streaming service while preventing unauthorized use and illegal copying and falsification of the contents.

According to the present invention, further, it is possible to provide the content using device, the mobile terminal and the application which are capable of reproducing offline the corresponding content automatically encrypted and stored during the real time playback although a user does not access a network.

According to the present invention, furthermore, it is possible to provide the content using device, the mobile terminal and the application which are capable of providing the method of using various contents through the execution of a real time reproducing function, an automatic reproducing function, an offline reproducing function and a downloading function for the contents, in association of the right-to-use information.

According to the present invention, moreover, it is possible to provide the content using device, the mobile terminal and the application which are capable of preventing a user from arbitrarily and illegally extending the terms of use by changing system time information after the terms of use of the corresponding right-of-use expires.

Although it has been described that all structural elements constituting the embodiment of the present invention are integrally combined or operate in an integral combination, the present invention should not be limited to the embodiment. That is, all structural elements may be selectively combined and operate within the scope of the present invention. Further, the structural elements may be individually implemented in independent hardware, but some or all structural elements may be selectively combined and implemented in a computer program having a program module of performing some functions or all functions combined in one or more pieces of hardware. The codes and code segments constituting the computer program may be deduced by a person skilled in the art to which the present invention belongs. The computer program may be stored in the computer readable media, and read and executed by the computer, thereby implementing the embodiment of the present invention. The storage media for the computer program may include the magnetic storage media, the optical storage media, the carrier wave media and the like.

Further, the terms "includes", "constitutes", or "has" mentioned above mean that a corresponding structural element is included unless they have no reverse meaning. Accordingly, it should be interpreted that the terms may not exclude but further include other structural elements. Unless defined differently, all terms used herein, which include technical terminologies or scientific terminologies, have the same meaning as that generally understood by a person skilled in the art to which the present invention belongs. It should be interpreted that generally used terminologies such as terms defined in dictionaries have the same meaning as that in context of the related technology.

## Claims

1. An apparatus for using contents, the apparatus comprising:
a streaming unit for transmitting streaming request information for the contents to a content providing server, and for reproducing the contents in real time while receiving packet data for the contents; and
an encrypted content creating and storing unit for encrypting all the packet data by using an encryption key created based on inherent information, so as to create and store the encrypted contents in a memory, when all the packet data for the contents are received.

2. The apparatus according to claim 1, wherein the streaming unit reads the packet data stored in a temporary buffer so as to reproduce the contents in real time, when the packet data received from the content providing server is stored in the temporary buffer allocated to the memory, and the encrypted content creating and storing unit encrypts all the packet data by using the encryption key so as to create the encrypted contents, when all the packet data are stored in the temporary buffer.

3. The apparatus according to claim 1 or 2, wherein the encrypted content creating and storing unit creates the encryption key in which inherent information including at least one piece of log-on information, user identification information, device identification information, and application identification information is expressed in a form of a bit string, or receives the encryption key created in the content providing server, and stores a decryption key corresponding to the encryption key in the memory.

4. The apparatus according to claim 3, further comprising an offline playback unit for decrypting the encrypted contents by using the decryption key only in the case that the decryption key is stored, after it is identified whether the decryption key is stored in the memory when offline playback request information for the encrypted contents stored in the memory is input.

5. A method of using contents provided by a content using apparatus, the method comprising:
transmitting streaming request information for the contents to a content providing server;
reproducing the contents in real time while receiving packet data of the contents from the content providing server;
encrypting all the packet data by using an encryption key created based on inherent information, so as to create the encrypted contents, when all the packet data of the contents are received after or before a completion of the real-time playback; and
storing the encrypted contents in a memory.

6. A computer readable media for storing a program executing a content using method, the storage media comprising: the program which implements a function of transmitting streaming request information for contents to a content providing server through a communication module of a mobile terminal, and reproducing the contents in real time by using packet data for the contents which are received through the communication module; a function of encrypting all the packet data by using an encryption key created based on inherent information, so as to create the encrypted contents, when all the packet data of the contents are received; and a function of storing the encrypted contents in a memory of the mobile terminal.

7. The computer readable media according to claim 6, wherein the media comprises a program implementing a function of storing the packet data received from the content providing server in a temporary buffer allocated to the memory, and a function of encrypting all the packet data stored in the temporary buffer by using the encryption key so as to create the encrypted contents.

8. The computer readable media according to claim 6, wherein the media comprises a program implementing a function of creating the encryption key in which the inherent information including at least one piece of log-in information, user identification information, mobile terminal identification information and application identification is expressed in a bit string, or receiving the encryption key created in the content providing server, and a function of storing a decryption key corresponding to the encryption key in the memory.

9. The computer readable media according to claim 8, wherein the media comprises a program implementing a function of registering the encrypted contents in an offline playlist and storing the contents in the memory, and a function of decrypting the encrypted contents by using the decryption key only in the case that the decryption key is stored, after it is identified whether the decryption key is stored in the memory when offline playback request information for the encrypted contents which are registered in the offline playlist is input.

10. The computer readable media according to claim 6, wherein the media comprises a program implementing a function of storing and managing right-to-use information on which use authority information including at least one piece of information on an available service type, information on the number of available contents, and information on terms of use is defined, in the memory, and a function of transmitting the streaming request information to the content providing server after it is determined whether the media has a streaming right for reproducing the contents in real time, based on the use authority information.

11. The computer readable media according to claim 10, wherein the media comprises a program implementing a function of transmitting the streaming request information to the content providing server after it is determined whether the media has the streaming right to reproduce the contents in real time based on the use authority information, and a function of reproducing the encrypted contents, after it is determined whether the media has the authority to reproduce the encrypted contents stored in the memory, based on the use authority information.

12. The computer readable media according to claim 11, wherein the media comprises a program implementing a function of comparing reference time information with expiration time information identified through the information on the terms of use included in the use authority information, and as a result of a comparison, determining that a playback of the encrypted contents is possible when the expiration time information is later than the reference time information while determining that the playback of the encrypted contents is impossible when the expiration time information is earlier than the reference time information.

13. The computer readable media according to claim 12, wherein the media comprises a program implementing a function of logging in to the content providing server when a communication function of the mobile terminal is enabled, and obtaining later time information between the most recent server access time information of the mobile terminal received from the content providing server and system time information of the mobile terminal as the reference time information.

14. The computer readable media according to claim 6, wherein the media comprises a program implementing a function of classifying and displaying basic information on contents received from the content providing server and previously stored in the memory, according to each of plural pieces of channel information, and a function of transmitting the streaming request information to the content providing server through the communication module when playback request information for the contents corresponding to the classified basic information for the specific contents is input.

15. The computer readable media according to claim 6, wherein the media comprises a program implementing a function of classifying and displaying basic information on contents received from the content providing server and previously stored in the memory, according to each of plural pieces of channel information, and registering and managing the basic information the specific contents in a newly created playlist or a selected playlist when putting-in content request information for the specific contents corresponding to the basic information on the specific contents which are classified as specific channel information is input, and a function of transmitting downloading request information for the specific contents to the content providing server through the communication module when offline playlist creating request information for the specific contents corresponding to the basic information on the specific contents registered in the playlist is input, encrypting all packet data for the specific contents by using the encryption key so as to create the encrypted contents when all data for the specific contents are received, and registering the encrypted contents in an offline playlist so as to store them in the memory.
